# FASCICULE DE BREVET EUROPEEN

(11) **EP 0 714 797 B1**
(45) Date de publication et mention de la délivrance du brevet: **13.01.1999**
(21) Numéro de dépôt: 95402630.8
(22) Date de dépôt: 22.11.1995
(51) Int. Cl.: B60H 1/00, F28F 9/00, F28F 13/06

(54) **Boîtier pour le logement d'un échangeur de chaleur dans une installation de chauffage et/ou de climatisation d'un véhicule automobile**
Aufnahmegehäuse eines Wärmetauschers in einer Heizungs- oder Klimaanlage eines Kraftfahrzeugs
Box for housing a heat exchanger in a vehicle heating or air conditioning installation

(30) Priorité: 29.11.1994 FR 9414300
(43) Date de publication de la demande: 05.06.1996
(73) Titulaire: VALEO CLIMATISATION, 78321 La Verrière (FR)
(72) Inventeur: Guillemin, Jean, F-78990 Elancourt (FR); Aubry, Paul, F-28400 Margon (FR)
(74) Mandataire: Gamonal, Didier

(56) Documents cités:
- FR-A- 2 444 580
- FR-A- 2 476 297
- FR-A- 2 532 739
- US-A- 2 873 953
- US-A- 5 163 505

## Description

L'invention concerne un boîtier propre à loger un échangeur de chaleur dans une installation de chauffage et/ou de climatisation d'un véhicule automobile, ledit boîtier ménageant un conduit d'air de section sensiblement conjuguée de la configuration de l'échangeur de chaleur.

Les échangeurs de chaleur utilisés dans ce type d'installation ont habituellement une configuration de forme générale parallélépipédique et comprennent un corps d'échange thermique, par exemple un faisceau de tubes à ailettes, ayant deux faces d'extrémité dont l'une au moins est coiffée par une boîte à eau. Ces échangeurs de chaleur sont habituellement parcourus par un liquide, tel que le fluide de refroidissement du moteur du véhicule.

L'échangeur de chaleur est alors placé transversalement dans le conduit ménagé par le boîtier, de sorte qu'un flux d'air circulant dans le conduit traverse le corps de l'échangeur de chaleur pour assurer un échange thermique optimal entre l'air et le liquide qui parcourt l'échangeur de chaleur.

Il en résulte que le conduit ménagé par le boîtier présente habituellement une section transversale sensiblement rectangulaire correspondant à la configuration de l'échangeur de chaleur.

Dans la plupart des cas, l'échangeur de chaleur est àisposé transversalement dans le conduit à la manière d'un tiroir et, pour des questions de montage ou de démontage, il est alors nécessaire de prévoir un intervalle pour ménager un jeu suffisant entre l'échangeur de chaleur et le conduit, ce qui pose un problème d'étanchéité, étant donné qu'il est important que l'air traverse en totalité l'échangeur de chaleur pour optimiser le rendement thermique.

Diverses solutions ont déjà été proposées pour réaliser cette étanchéité.

La solution généralement employée consiste à interposer des bandes d'un matériau souple écrasable, par exemple de mousse de matière plastique, entre l'échangeur de chaleur et le conduit.

Mais comme ces bandes sont généralement collées sur l'échangeur, il peut arriver qu'une bande se décolle ou se déchire. En outre, ces bandes peuvent se désagréger au cours du temps au détriment de l'étanchéité et générer des odeurs désagréables.

Il a été proposé également, comme enseigné par la publication de Brevet FR 2 476 297, d'utiliser un anneau plat en matériau déformable, par exemple en mousse de polyuréthane, interposé entre l'échangeur de chaleur et le conduit.

Cette solution présente sensiblement les mêmes inconvénients que la solution précédente.

Une autre solution consiste à assurer l'étanchéité par des paires de nervures venant de moulage avec le conduit et venant en appui sur des faces latérales de l'échangeur. Pour assurer l'étanchéité, il est nécessaire que le corps de l'échangeur de chaleur s'adapte sans jeu dans le passage ménagé entre les nervures. Il en résulte pour inconvénient que le corps d'échange de chaleur, habituellement constitué d'un faisceau de tubes à ailettes, est susceptible d'être endommagé lors du montage de l'échangeur dans le boîtier. Le démontage de l'échangeur de chaleur est en outre rendu difficile du fait qu'il n'existe pratiquement pas de jeu entre l'échangeur de chaleur et les nervures.

Au surplus, cette solution est difficilement applicable dans le cas d'échangeurs de chaleur de grandes dimensions.

L'invention a notamment pour but de surmonter les inconvénients précités.

Elle propose en conséquence un boîtier du type défini en introduction, lequel comprend deux parois latérales opposées situées respectivement en regard de deux faces latérales de l'échangeur de chaleur en ménageant à chaque fois un intervalle, et dans lequel le boîtier comprend deux cloisons transversales se raccordant respectivement aux parois latérales pour obturer respectivement les deux intervalles au niveau d'une face d'entrée de l'échangeur de chaleur, chaque cloison transversale étant conformée pour permettre à un flux d'air pénétrant par la face d'entrée de l'échangeur de chaleur de former un tourbillon d'air dans l'intervalle et le long de cette cloison transversale, ce qui assure l'étanchéité dans cet intervalle.

On obtient ainsi une étanchéité sans joint grâce à un tourbillon d'air, s'apparentant à un vortex, générant des turbulences faisant office d'étanchéité.

On évite ainsi les inconvénients des solutions traditionnelles utilisant un joint en matériau déformable ou utilisant des paires de nervures.

Il en résulte que la partie aval de l'échangeur de chaleur, c'est-à-dire celle qui correspond à la face de sortie située à l'opposé de la face d'entrée, peut avoir des degrés de liberté dans le boîtier pour offrir les jeux nécessaires au montage et/ou au démontage.

Il n'est donc plus nécessaire de prévoir des jeux limités avec une tolérance précise.

De ce fait, l'échangeur de chaleur ne risque pas d'être endommagé à l'occasion d'opérations de montage et/ou de démontage, ce qui simplifie grandement ces opérations.

Avantageusement, chaque cloison transversale est de configuration semi-cylindrique et tourne sa concavité dans la direction d'écoulement du flux d'air.

Cette configuration semi-cylindrique, avantageusement semi-circulaire, facilite la création de tourbillons d'air en forme de vortex.

Selon une autre caractéristique de l'invention, chaque cloison transversale de configuration semi-cylindrique comprend un bord interne rattaché à la paroi latérale du boîtier et un bord externe en appui contre la face d'entrée de l'échangeur de chaleur, à proximité du raccordement de la face d'entrée et de la face latérale correspondante.

Les deux cloisons transversales forment ainsi butées d'appui pour la face d'entrée de l'échangeur de chaleur.

Dans une forme de réalisation préférée de l'invention, le boîtier comprend en outre deux parois transversales opposées qui, avec les deux parois latérales, délimitent un conduit de section sensiblement rectangulaire.

Avantageusement, chaque cloison transversale s'étend sur toute la hauteur de la paroi latérale entre les deux parois transversales.

L'invention s'applique tout particulièrement à un boîtier dans lequel l'échangeur de chaleur comprend un corps d'échange thermique ayant deux faces d'extrémité dont l'une au moins est coiffée d'une boîte à eau. Selon l'invention, les deux faces d'extrémité du corps sont maintenues respectivement dans les deux parois transversales du boîtier.

L'invention s'applique tout particulièrement à un échangeur de chaleur comprenant un faisceau de tubes en U traversant des ailettes et une boîte à eau. Dans ce cas, l'une des parois transversales comprend un logement formant gouttière pour recevoir les extrémités en U des tubes du faisceau.

Cet évidement est avantageusement bordé par deux nervures en saillie vers l'intérieur du conduit pour immobiliser les dernières ailettes du faisceau situées près des extrémités en U des tubes.

L'autre paroi transversale comporte avantageusement un logement formant trappe aménagé pour recevoir la boîte à eau.

Ce logement formant trappe permet aussi le montage de l'échangeur de chaleur à la manière d'un tiroir.

Selon une autre caractéristique de l'invention, au moins une patte de maintien est reliée à la boîte à eau du côté de la paroi transversale, à l'opposé du conduit.

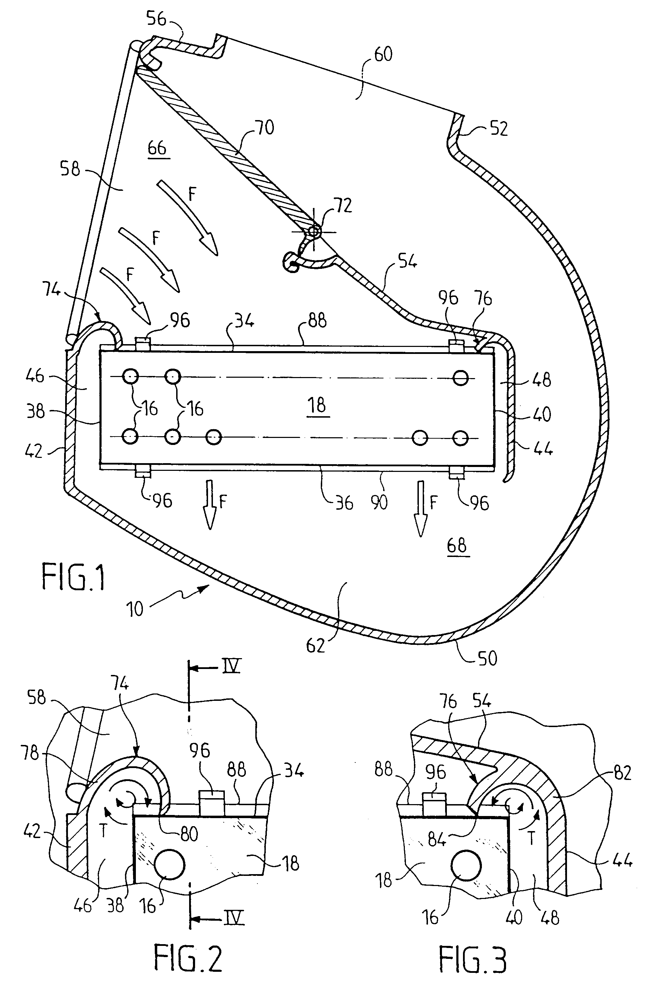

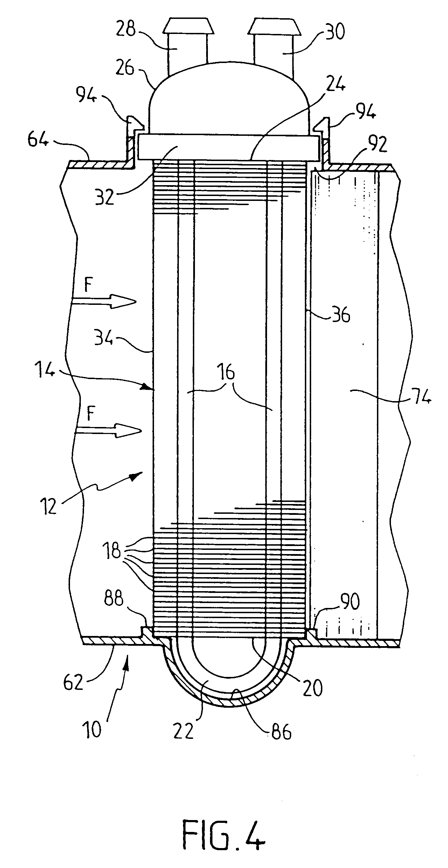

Dans la description qui suit, faite seulement à titre d'exemple, on se réfère aux dessins annexés, sur lesquels :
- -: la figure 1 est une vue partielle en coupe d'un boîtier d'une installation de chauffage et/ou de climatisation selon l'invention;
- -: la figure 2 est un détail à échelle agrandie de la figure 1 montrant l'une des cloisons transversales du boîtier;
- -: la figure 3 est une vue en coupe à échelle agrandie de la figure 1 montrant l'autre cloison transversale du boîtier; et
- -: la figure 4 est une vue en coupe selon la ligne IV-IV de la figure 2.

On se réfère à la figure 1 qui montre un boîtier 10 faisant partie d'une installation de chauffage et/ou de climatisation de véhicule automobile et logeant intérieurement un échangeur de chaleur 12 qui, dans l'exemple, est un radiateur de chauffage parcouru par le liquide de refroidissement du moteur du véhicule.

L'échangeur de chaleur 12 (figures 1 et 4) de forme générale parallélépipédique comporte un corps d'échange thermique 14 formé d'une multiplicité de tubes en U ou en épingle 16 traversant un paquet d'ailettes 18 de forme générale rectangulaire.

Le corps 14 (figure 4) comprend une première face d'extrémité 20 traversée par les extrémités 22, en forme de U, des tubes 16 et une seconde face d'extrémité 24 qui est coiffée par une boîte à eau 26 munie de tubulures 28 et 30 d'entrée et de sortie du liquide de refroidissement. La boîte à eau 26 est montée à l'extrémité du corps 14 par l'intermédiaire d'un collecteur 32, ou plaque à trous, traversé par les tubes du faisceau.

Le corps 14 de l'échangeur est destiné à être balayé par un flux d'air. Il comprend une face d'entrée 34, une face de sortie 36 et deux faces latérales 38 et 40.

Le boîtier 10 comprend deux parois latérales opposées 42 et 44 (figure 1) situées respectivement en regard des deux faces latérales 38 et 40 de l'échangeur de chaleur 12 en ménageant à chaque fois un intervalle 46 respectivement 48.

La paroi latérale 42 se poursuit par une paroi 50 à configuration en U qui aboutit à une extrémité 52. La paroi latérale 44 est placée à l'intérieur de la paroi en U 50 et se poursuit par une paroi médiane 54.

Le boîtier comprend en outre une paroi 56 qui, en combinaison avec les deux extrémités de la paroi 50, délimite une entrée d'air 58 et une sortie d'air 60.

Le boîtier 10 est en outre délimité par deux parois transversales opposées, à savoir une paroi transversale inférieure 62 et une paroi transversale supérieure 64 (figure 4).

Le boîtier définit intérieurement un premier conduit 66, dit conduit d'air froid, reliant directement l'entrée 58 à la sortie 60 et un second conduit 68, dit conduit d'air chaud, qui affecte une forme en U et qui relie l'entrée 58 à la sortie 60 via l'échangeur de chaleur 12. Un volet 70 monté pivotant autour d'un axe 72 permet de régler la répartition de l'air entre les deux conduits 66 et 68 et par conséquent la température de l'air au niveau de la sortie 60, comme cela est bien connu. Le conduit 68 qui loge l'échangeur de chaleur 12 a une section transversale rectangulaire sensiblement conjuguée de la configuration de cet échangeur de chaleur.

Dans la position représentée sur la figure 1, le volet 70 est dans une position telle qu'un flux d'air F entrant dans le boîtier circule uniquement dans le conduit 68. Le flux d'air F balaie ainsi le corps 14 de l'échangeur de chaleur en pénétrant par la face d'entrée 34 et en s'échappant par la face de sortie 36.

Conformément à l'invention, le boîtier 10 comprend en outre deux cloisons transversales 74 et 76 se raccordant respectivement aux parois latérales 42 et 44 pour obturer respectivement les deux intervalles 46, 48 au niveau de la face d'entrée 34 de l'échangeur de chaleur. La cloison 74 (figure 2) est de configuration semi-cylindrique circulaire et tourne sa concavité dans la direction d'écoulement du flux d'air. Elle comprend un bord interne 78 rattaché à la paroi latérale 42 et un bord externe 80 en appui contre la face d'entrée 34 de l'échangeur à proximité du raccordement de cette face d'entrée avec la face latérale 38. De façon correspondante, la cloison 76 a une configuration semi-cylindrique circulaire et tourne sa concavité dans la direction d'écoulement du flux d'air. Elle comprend un bord interne 82 rattaché à la paroi latérale 44 du boîtier et un bord externe 84 venant en appui contre la face d'entrée 34 de l'échangeur à proximité du raccordement de cette face d'entrée avec la face latérale 40.

Il en résulte qu'une partie du flux d'air pénétrant dans l'échangeur de chaleur forme à chaque fois un tourbillon d'air T (figures 2 et 3) formant vortex et générant des turbulences qui font office de joints d'étanchéité, un matelas d'air étant ainsi créé à chaque fois dans l'intervalle 46 ou 48 sur toute la hauteur de la cloison transversale. Il n'est donc plus nécessaire de prévoir de joints d'étanchéité entre les faces latérales 38 et 40 de l'échangeur de chaleur et les parois latérales 42 et 44 du conduit.

Comme on peut le voir sur la figure 4, la cloison 74 s'étend sur toute la hauteur de la paroi latérale 42, c'est-à-dire entre les deux parois transversales 62 et 64. Il en est de même pour l'autre cloison transversale 76.

La paroi transversale inférieure 62 comprend un logement 86 formant gouttière pour recevoir les extrémités 22 en U des tubes du faisceau. Ce logement affecte, en section droite, une forme générale semi-circulaire.

Il est bordé par deux nervures 88, 90 formées en saillie vers l'intérieur du conduit pour immobiliser les dernières ailettes 18 du faisceau, situées près des extrémités en U des tubes.

L'autre paroi longitudinale 64 comporte un logement 92 formant trappe aménagé pour recevoir la boîte à eau. Ce logement 92 permet le montage et le démontage de l'échangeur de chaleur à la manière d'un tiroir déplacé transversalement à la direction du conduit.

Le logement 92 est défini par une ouverture de forme générale rectangulaire adaptée à la forme des ailettes. L'échangeur de chaleur est maintenu en outre par des pattes de maintien 94 reliée à la boîte à eau 26 du côté de la paroi transversale 64 qui est située à l'opposé du conduit. Dans l'exemple, les pattes 94 sont clipsées sur la périphérie du collecteur 32 de la boîte à eau. Il est à noter que le corps 14 est maintenu par quatre plots 96 au niveau de la paroi inférieure 62 (figure 1).

L'invention permet ainsi un montage et démontage aisé de l'échangeur de chaleur, du fait qu'il existe un jeu entre les faces latérales de l'échangeur de chaleur et les parois latérales du boîtier. L'étanchéité est obtenue par les tourbillons d'air, sans qu'il soit nécessaire de prévoir un joint.

Bien entendu, l'invention n'est pas limitée à la forme de réalisation décrite précédemment à titre d'exemple.

## Revendications

1. Boîtier pour le logement d'un échangeur de chaleur dans une installation de chauffage et/ou de climatisation de véhicule automobile, le boîtier (10) délimitant un conduit d'air (68) de section sensiblement conjuguée de la configuration de l'échangeur de chaleur,
caractérisé en ce qu'il comprend deux parois latérales opposées (42, 44) situées respectivement en regard de deux faces latérales (38, 40) de l'échangeur de chaleur (12) en ménageant à chaque fois un intervalle (46, 48) et en ce qu'il comprend deux cloisons transversales (74, 76) se raccordant respectivement aux parois latérales (42, 44) pour obturer respectivement les deux intervalles (46, 48) au niveau d'une face d'entrée (34) de l'échangeur de chaleur (12), chaque cloison transversale (74, 76) étant conformée pour permettre à un flux d'air pénétrant par la face d'entrée (34) de l'échangeur de chaleur de former un tourbillon d'air (T) dans l'intervalle (46, 48) et le long de cette cloison transversale, ce qui assure l'étanchéité dans cet intervalle.

2. Boîtier selon la revendication 1, caractérisé en ce que chaque cloison transversale (42, 44) est de configuration semi-cylindrique et tourne sa concavité dans la direction d'écoulement du flux d'air (F).

3. Boîtier selon la revendication 2, caractérisé en ce que chaque cloison transversale (74, 76) de configuration semi-cylindrique comprend un bord interne (78, 82) rattaché à la paroi latérale (42, 44) du boîtier et un bord externe (80, 84) en appui contre la face d'entrée (34) de l'échangeur de chaleur (12), à proximité du raccordement de cette face d'entrée et de la face latérale correspondante (42, 44).

4. Boîtier selon l'une des revendications 1 à 3, caractérisé en ce qu'il comprend en outre deux parois transversales opposées (62, 64) qui, avec les deux parois latérales (42, 44), délimitent un conduit (68) de section sensiblement rectangulaire.

5. Boîtier selon la revendication 4, caractérisé en ce que chaque cloison transversale (74, 76) s'étend sur toute la hauteur de la paroi latérale (42, 44) entre les deux parois transversales (62, 64).

6. Boîtier selon l'une des revendications 4 et 5, dans lequel l'échangeur de chaleur (12) comprend un corps d'échange thermique (14) ayant deux faces d'extrémité (20, 24) dont l'une au moins est coiffée d'une boîte à eau (26), caractérisé en ce que les deux faces d'extrémité (20, 24) sont maintenues respectivement dans les deux parois transversales (62, 64) du boîtier.

7. Boîtier selon la revendication 6, dans lequel l'échangeur de chaleur (12) comprend un faisceau de tubes en U (14) traversant des ailettes (18) et une boîte à eau (26), caractérisé en ce que l'une (62) des parois transversales comprend un logement (86) formant gouttière pour recevoir les extrémités (22) en U des tubes (16) du faisceau.

8. Boîtier selon la revendication 7, caractérisé en ce que le logement (86) en forme de gouttière est bordé par deux nervures (88, 90) en saillie vers l'intérieur du conduit pour immobiliser les dernières ailettes (18) du faisceau situées près des extrémités (22) en U des tubes du faisceau.

9. Boîtier selon l'une des revendications 7 et 8, caractérisé en ce que l'autre paroi transversale (64) comporte un logement (92) formant trappe aménagé pour recevoir la boîte à eau (26).

10. Boîtier selon la revendication 9, caractérisé en ce qu'au moins une patte de maintien (94) est reliée à la boîte à eau du côté de la paroi transversale (64), à l'opposé du conduit (68).

## Claims

1. A casing for housing a heat exchanger in a heating and/or air conditioning installation for a motor vehicle, the casing (10) defining an air duct (68) having a cross section substantially matching the configuration of the heat exchanger, characterised in that it comprises two opposed lateral walls (42, 44) situated in facing relationship with two respective lateral faces (38, 40) of the heat exchanger (12), defining a gap (46, 48) each time, and in that it includes two transverse baffles (74, 76) joined respectively to the lateral walls (42, 44) so as to close off respectively the two gaps (46, 48) at the level of an inlet face (34) of the heat exchanger (12), each transverse baffle (74, 76) being so configured as to enable a stream of air penetrating through the inlet face (34) of the heat exchanger to form a vortex of air (T) in the gap (46, 48) and along the said transverse baffle, which ensures sealing in the said gap.

2. A casing according to Claim 1, characterised in that each transverse baffle (42, 44) has a semi-cylindrical configuration with its concavity facing in the direction of flow of the stream of air (F).

3. A casing according to Claim 2, characterised in that each transverse baffle (74, 76) of semi-cylindrical configuration has an inner edge (78, 82) attached to the lateral wall (42, 44) of the casing and an outer edge (80, 84) in engagement against the inlet face (34) of the heat exchanger (12), close to the junction of the said inlet face and the corresponding lateral face (42, 44).

4. A casing according to one of Claims 1 to 3, characterised in that it further includes two opposed transverse walls (62, 64) which, with the two lateral walls (42, 44), define a duct (68) of substantially rectangular cross section.

5. A casing according to Claim 4, characterised in that each transverse baffle (74, 76) extends over the whole height of the lateral wall (42, 44) between the two transverse walls (62, 64).

6. A casing according to Claim 4 or Claim 5, in which the heat exchanger (12) comprises a heat exchange body (14) having two end faces (20, 24), at least one of which is surmounted by a water header (26), characterised in that the two end faces (20, 24) are held respectively in the two transverse walls (62, 64) of the casing.

7. A casing according to Claim 6, in which the heat exchanger (12) includes a bundle of U tubes (16) extending through fins (18) and a water header (26), characterised in that one (62) of the transverse walls includes a housing portion (86) in the form of a channel for receiving the U-shaped end portions (22) of the tubes (16) of the bundle.

8. A casing according to Claim 7, characterised in that the channel-shaped housing portion (86) is flanked by two ribs (88, 90) projecting towards the interior of the duct for immobilising the endmost fins (18) of the bundle that are situated close to the U-shaped end portions (22) of the tubes in the bundle.

9. A casing according to Claim 7 or Claim 8, characterised in that the other transverse wall (64) includes a housing portion (92) defining a trap which is arranged to receive the water header (26).

10. A casing according to Claim 9, characterised in that at least one retaining finger (94) is connected to the water header on the opposite side of the transverse wall (64) from the duct (68).

## Patentansprüche

1. Gehäuse für die Aufnahme eines Wärmetauschers in einer Heizungs- und/oder Klimaanlage eines Kraftfahrzeugs, wobei das Gehäuse (10) einen Luftkanal (68) mit einem Querschnitt begrenzt, der im wesentlichen auf die Gestaltung des Wärmetauschers abgestimmt ist, **dadurch gekennzeichnet,** daß es Zwei gegenüberliegende Seitenwände (42, 44) umfaßt, die jeweils gegenüber zwei Seitenflächen (38, 40) des Wärmetauschers (12) angeordnet sind, wobei jeweils ein Zwischenraum (46, 48) vorgesehen ist, und daß es Zwei Querzwischenwände (74, 76) umfaßt, die sich an die beiden Seitenwände (42, 44) anschließen, um die beiden Zwischenräume (46, 48) an einer Eintrittsfläche (34) des Wärmetauschers (12) zu verschließen, wobei jede Querzwischenwand (74, 76) so gestaltet ist, daß ein Luftstrom, der durch die Eintrittsfläche (34) des Wärmetauschers einströmt, einen Luftwirbel (T) im Zwischenraum (46, 48) und entlang dieser Querzwischenwand bilden kann, wodurch die Dichtigkeit in diesem Zwischenraum gewährleistet wird.

2. Gehäuse nach Anspruch 1 **, dadurch gekennzeichnet,** daß jede Querzwischenwand (42, 44) eine halbzylindrische Gestaltung aufweist und ihre Austiefung in der Strömungsrichtung des Luftstroms (F) gerichtet ist.

3. Gehäuse nach Anspruch 2 , **dadurch gekennzeichnet,** daß jede Querzwischenwand (74, 76) mit halbzylindrischer Gestaltung eine an die Seitenwand (42, 44) des Gehäuses angefügte Innenkante (78, 82) und eine Außenkante (80, 84) umfaßt, die an der Eintrittsfläche (34) des Wärmetauschers (12), in der Nähe des Anschlusses dieser Eintrittsfläche und der entsprechenden Seitenfläche (42, 44) anliegt.

4. Gehäuse nach einem der Ansprüche 1 bis 3 , **dadurch gekennzeichnet,** daß es außerdem zwei gegenüberliegende Querwände (62, 64) umfaßt, die zusammen mit den beiden Seitenwänden (42, 44) einen Kanal (68) mit in etwa rechteckigem Querschnitt begrenzen.

5. Gehäuse nach Anspruch 4 , **dadurch gekennzeichnet,** daß sich jede Querzwischenwand (74, 76) auf der gesamten Höhe der Seitentwand (42, 44) zwischen den beiden Querwänden (62, 64) erstreckt.

6. Gehäuse nach einem der Ansprüche 4 und 5, wobei der Wärmetauscher (12) einen Wärmeaustauschkörper (14) mit zwei Abschlußflächen (20, 24) umfaßt, von denen mindestens eine durch einen Wasserkasten (26) abgeschlossen wird , **dadurch gekennzeichnet,** daß die beiden Abschlußflächen (20, 24) in den beiden Querwänden (62, 64) des Gehäuses gehalten werden.

7. Gehäuse nach Anspruch 6, wobei der Wärmetauscher (12) ein Bündel von U-förmigen Rohren (14), die durch Rippen (18) hindurchgehen, und einen Wasserkasten (26) umfaßt , **dadurch gekennzeichnet**, daß eine (62) der Querwändeeine als Rinne ausgebildete Aufnahme (86) für das Einsetzen der U-förmigen Enden (22) der Rohre (16) des Rohrbündels enthält.

8. Gehäuse nach Anspruch 7 , **dadurch gekennzeichnet,** daß die rinnenförmige Aufnahme (86) durch zwei zum Innern des Kanals vorstehende Rippen (88, 90) eingefaßt wird, um die nahe den U-förmigen Enden (22) der Rohre des Rohrbündels angeordneten letzten Rippen (18) des Rohrbündels zu sichern.

9. Gehäuse nach einem der Ansprüche 7 und 8 , **dadurch gekennzeichnet,** daß die andere Querwand (64) eine als Schacht ausgebildete Aufnahme (92) enthält, die vorgesehen ist, um den Wasserkasten (26) aufzunehmen.

10. Gehäuse nach Anspruch 9 , **dadurch gekennzeichnet,** daß mindestens ein Halteansatz (94) mit dem Wasserkasten auf der Seite der Querwand (64), gegenüber dem Kanal (68), verbunden ist.
